Europäisches Patentamt

European Patent Office

Office européen des brevets

(19)

(11) **EP 0 695 046 A1**

(12) **EUROPÄISCHE PATENTANMELDUNG**

(43) Veröffentlichungstag:
   **31.01.1996 Patentblatt 1996/05**

(51) Int. Cl.⁶: **H04B 3/23**

(21) Anmeldenummer: **95111238.2**

(22) Anmeldetag: **18.07.1995**

(84) Benannte Vertragsstaaten:
   **AT CH DE ES FR GB IT LI NL SE**

(30) Priorität: **20.07.1994 CH 2298/94**
        **10.07.1995 CH 1996/95**

(71) Anmelder: **SIEMENS-ALBIS
   AKTIENGESELLSCHAFT
   CH-8047 Zürich (CH)**

(72) Erfinder:
   • **Gysel, Peter, Dr.**
      **CH-8048 Zürich (CH)**
   • **Wenger, Bruno**
      **CH-8804 Au / ZH (CH)**
   • **Kälin, August, Dr.**
      **CH-8906 Bonstetten (CH)**
   • **Müller, Daniel**
      **CH-8006 Zürich (CH)**

(54) **Sendefilter für einen Echokompensator**

(57)   Die Erfindung betrifft eine Schaltungsanordnung zum Kompensieren von Echosignalen, bestehend aus einem ein Sendesignal (SS) führenden Sendepfad, einem ein Empfangssignal (ES) führenden Empfangspfad, einem adaptiven Filter (AF), einem Kompensator (K), einem Digital/Analog-Wandler (DA), einem Sendefilter (SF), einer Übertragungseinheit (GS) und einer an dieser angeschlossenen Übertragungsleitung (L), über die zumindest das Sendesignal (SS), das Empfangssignal (ES) und Echosignalanteile übertragen werden. Der Sende- und der Empfangspfad sind ferner mit der Übertragungseinheit (GS) verbunden, und das Sendesignal (SS) wird dem adaptiven Filter (AF) zur Schätzung des Echosignals zugeführt, das im Kompensator (K) zur Erzeugung des Empfangssignals (ES) verarbeitet wird. Im Sendepfad wird das Sendesignal (SS) dem Digital/Analog-Wandler (DA) zugeführt, der mit der Symbolrate des Sendesignals (SS) analoge Rechteckpulse erzeugt, die im mit dem Digital/Analog-Wandler (DA) verbundenen Sendefilter (SF) in zur Übertragung über die Übertragungsleitung (L) geeignete Pulsformen transformiert werden. Das Sendefilter (SF) ist dabei derart konzipiert, dass der Digital/Analog-Wandler (DA) lediglich eine Auflösung von zwei Bit aufweist, wobei Nichtidealitäten, insbesondere Nichtlinearitäten, mit Hilfe des adaptiven Filters (AF) kompensiert werden. Dazu besteht dieser zumindest aus einem FIR-Filterteil, der vom Speicherkompensationstyp ist.

Fig. 3

Printed by Rank Xerox (UK) Business Services
2.9.7/3.4

**Beschreibung**

Die vorliegende Erfindung betrifft eine Schaltungsanordnung nach dem Oberbegriff des Patentanspruchs 1.

Kupferleitungen sind nach wie vor das Hauptübertragungsmedium für die Datenübertragung zwischen einem Teilnehmeranschluss und einer Fernmeldezentrale eines öffentlichen Fernmeldenetzes. Ein Teilnehmeranschluss muss für den Teilnehmer auf der einen Seite kostengünstig sein, auf der anderen Seite ist es wünschenswert, eine möglichst hohe Datenübertragungsrate realisieren zu können. Durch das Ersetzen der Kupferleitungen durch Glasfaserkabel könnte zwar die zweitgenannte Bedingung weitgehend erfüllt werden, jedoch würde dies mit erheblichen Kosten verbunden sein, da das bestehende Feinverteilungsnetz vollständig ersetzt werden müsste. Aus diesem Grund wurde bereits verschiedentlich die Entwicklung einer schnellen digitalen Vollduplex-Datenübertragungsleitung über Kupfertelefonleitungen vorgeschlagen. Eine Übersicht über diese als HDSL (High Bit Rate Digital Subscriber Line) bezeichnete Datenübertragung wurde beispielsweise im Aufsatz von J. W. Lechleider mit dem Titel "High Bit Rate Digital Subscriber Lines: A Review of HDSL Progress" veröffentlicht (IEEE Journal on Sel. Areas in Com., 9(6), Seiten 769 bis 784, August 1991).

Bei der HDSL Datenübertragung werden auf einem Kupferkabel in beiden Richtungen Daten übertragen. Eine sogenannte Übertragungseinheit - auch als Gabelschaltung bezeichnet - führt dabei die Richtungstrennung der zu sendenden und der zu empfangenden Signale durch. Da diese Richtungstrennung insbesondere für sich in ihrer Charakteristik ändernde Leitungen nicht perfekt realisiert werden kann, ist das vom fernen Teilnehmer empfangene Signal mit einem Echosignal (auch als Fehlersignal bezeichnet) des nahen Teilnehmers überlagert. Das Echosignal kann dabei um 30 bis 40 dB stärker sein als das eigentliche Nutzsignal. Um beim Empfänger die geforderte Bitfehlerwahrscheinlichkeit von ca. $10^{-7}$ erreichen zu können, wird eine adaptive Kompensation des Echos vorgenommen, indem mit Hilfe eines adaptiven Filters das Echosignal geschätzt und vom empfangenen Signal subtrahiert wird. Für das adaptive Filter werden dabei beispielsweise FIR-(Finite Impulse Response)-Filter verwendet, die 90 bis 100 Koeffizienten (Taps) aufweisen können und demzufolge einen entsprechend grossen Schaltungsteil benötigen. Zur Reduktion des Schaltungsaufwandes wurde in der europäischen Patentanmeldung EP-0 384 490 ein Echokompensator mit einem adaptiven Filter offenbart, das aus einem FIR-(Finite Impulse Response)- und einen IIR-(Infinite Impulse Response)-Filter in Kaskade geschaltet besteht. Dadurch wird zwar erreicht, dass der Schaltungsaufwand für das adaptive Filter reduziert wird, doch können mit diesem adaptiven Filter keine Nichtlinearitäten im Sendepfad kompensiert werden.

Ferner ist aus der europäischen Patentanmeldung EP-0 464 500 ein Echokompensator bekannt, bei dem im Sendepfad neben Verstärkungselementen zumindest eine Verzögerungseinheit, ein Digital/Analog-Wandler und ein analoges Tiefpassfilter vorgesehen sind, wobei besonders der Digital/Analog-Wandler wegen der benötigten hohen Auflösung und der gleichzeitig geforderten hohen Linearität nur mit entsprechend grossem Aufwand realisiert werden kann.

Schliesslich ist im Aufsatz von R. Batruni et al. mit dem Titel "Mixed Digital/Analog Signal-Processing for a Single-Chip 2B1Q U-Interface Tansceiver" (IEEE Journal of Solid-State Circuits, Vol. 25, No. 6, Dezember 1990, Seiten 1414 bis 1425) ein Echopfad beschrieben, der aus einem digitalen Vorfilter, einem Digital/Analog-Wandler und einem analogen Glättungsfilter besteht. Dabei wird mit Hilfe des digitalen Vorfilters das Sendesignal derart vorgeformt, dass nach dessen Wandlung in ein analoges Sendesignal mit Hilfe des Digital/Analog-Wandlers lediglich noch mit dem eine Tiefpasscharakteristik aufweisenden analogen Glättungsfilter gefiltert werden muss. Durch diese Schaltungsanordnung wird zwar ein annähernd optimales analoges Sendesignal erhalten, doch weisen ein derartiges digitales Vorfilter und der benötigte hochlineare Digital/Analog-Wandler einen relativ grossen Schaltungsaufwand auf.

Der vorliegenden Erfindung liegt daher die Aufgabe zugrunde, eine Schaltungsanordnung zur Erzeugung eines analogen Sendesignals anzugeben, bei welcher der Schaltungsaufwand vermindert ist.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Indem das Sendefilter die mit dem Digital/Analog-Wandler erzeugten analogen Rechteckpulse direkt in zur Übertragung über die Übertragungsleitung geeignete Pulse umsetzt, kann auf eine digitale Vorverarbeitung des Sendesignals vor der Digital/Analog-Wandlung verzichtet werden. Zwar wird der Schaltungsaufwand für das analoge Sendefilter grösser als für ein analoges Glättungsfilter, doch wird dieser Mehraufwand durch den Wegfall des digitalen Vorfilters durch die Möglichkeit, einen wesentlich einfacheren Digital/Analog-Wandler verwenden zu können, mehr als kompensiert. Insbesondere können Auflösung und Geschwindigkeit des Digital/Analog-Wandlers wesentlich reduziert werden.

In einer weiteren Ausführungsform wird für mindestens einen Teil des adaptiven Filters ein auf dem Speicherkompensationsprinzip basierendes FIR-Filter verwendet. Dieses spezielle adaptive FIR-Filter ermöglicht die Reduktion der Linearitätsanforderungen an den Digital/Analog-Wandler, da Nichtlinearitäten des Digital/Analog-Wandlers kompensiert werden können. Dies hat eine weitere Reduktion des Schaltungsaufwandes zur Folge.

Bei der Realisation der Schaltungsanordnung durch Integration auf einem Chip (als sogenannter integrierter Schaltkreis) ist eine Reduktion des Schaltungsaufwandes nicht nur aus Platzgründen von Bedeutung, sondern besonders auch wegen des damit verbundenen verminderten Energieverbrauchs, da dieser bei gleicher Technologie mit zunehmender Grösse der Schaltungsanordnung ebenfalls zunimmt. Die besondere Bedeutung des letztgenannten Vorteils ergibt sich daraus, dass die beim Teilnehmer zur Verfügung stehende Energie durch vorhandene Energieversorgungsvorrichtungen begrenzt ist. Zusätzliche Energiequellen sind nicht vorgesehen.

Die Erfindung wird nachfolgend anhand von Zeichnungen beispielsweise näher erläutert. Dabei zeigt

Fig. 1          ein Übertragungsnetzwerk mit einem bekannten Echokompensator mit einem im Sendepfad enthaltenen digitalen Vorfilter,

Fig. 2          verschiedene Signalverläufe im Sendepfad des bekannten Echokompensators,

Fig. 3          das Übertragungsnetzwerk mit einem erfindungsgemässen Echokompensator mit einem im Sendepfad enthaltenen analogen Sendefilter,

Fig. 4          verschiedene Signalverläufe im Sendepfad des erfindungsgemässen Echokompensators,

Fig. 5          eine möglich Realisierungsform des analogen Sendefilters,

Fig. 6          ein im Echokompensator verwendetes adaptives Filter, bestehend aus einem IIR- und einem FIR-Filterteil und

Fig. 7 und Fig. 8          weitere Ausführungsvarianten des im Echokompensator verwendeten adaptiven Filters.

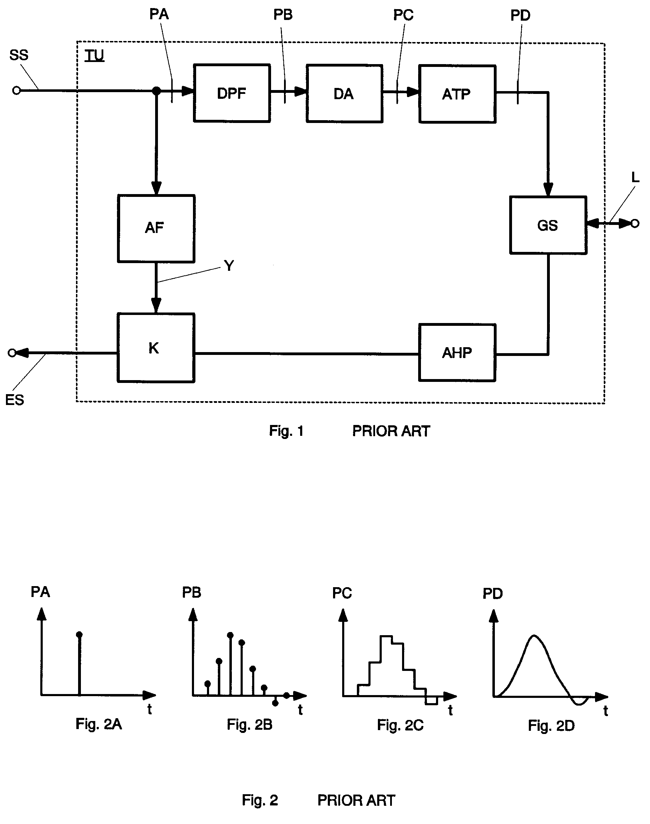

Fig. 1 zeigt ein bekanntes Übertragungsnetzwerk TU zur Trennung der über eine Übertragungsleitung L in beide Richtungen übertragenen analogen Informationen in ein digitales Sendesignal SS und ein digitales Empfangssignal ES. Das Übertragungsnetzwerk TU beinhaltet im wesentlichen einen das Sendesignal SS führenden Sendepfad, bestehend aus einem digitalen Vorfilter DPF, einem Digital/Analog-Wandler DA und einem analogen Glättungsfilter ATP, und einem das Empfangssignal ES führenden Empfangspfad, bestehend aus einem analogen Hochpassfilter AHP und einem Kompensator K, wobei das analoge Glättungsfilter ATP zum Übertragen des analogen Sendesignals und das analoge Hochpassfilter AHP zum Empfangen des analogen Empfangssignals an eine Übertragungseinheit GS gekoppelt sind. Ferner ist das Sendesignal SS sowohl dem adaptiven Filter AF als auch dem digitalen Vorfilter DPF beaufschlagt, dessen Ausgangssignal dem Digital/Analog-Wandler DA zugeführt ist. Ferner ist der Digital/Analog-Wandler DA mit dem analogen Gläffungsfilter ATP verbunden.

Bei der Realisation der Übertragungseinheit GS wird aufgrund von Nichtidealitäten zumindest ein Teil des Sendesignals SS in den Empfangspfad direkt übertragen. Zudem gelangt ein an entfernteren Stellen der Übertragungsleitung L erzeugtes unzulässiges Echo des Sendesignals SS in den Empfangspfad. Somit wird das eigentliche Empfangssignal mit einem Fehlersignal, bestehend aus den beiden obengenannten Komponenten, überlagert. Im folgenden soll dieses Fehlersignal generell als Echosignal bezeichnet werden. Zur Erlangung der in der Einleitung erwähnten gewünschten Bitfehlerwahrscheinlichkeit ist aus diesem Grund ein adaptives Filter AF vorgesehen, mit Hilfe dessen ein Echosignal Y geschätzt und anschliessend zur Wiederherstellung des tatsächlichen Empfangssignals ES verwendet wird. Aus diesem Grund ist im Empfangspfad dem analogen Hochpassfilter AHP der Kompensator K nachgeschaltet, in dem das geschätzte Echosignal Y vom empfangenen Signal subtrahiert wird. Somit steht am Ausgang des Übertragungsnetzwerks TU annähernd das tatsächliche Empfangssignal zur Verfügung.

Der Kompensator K kann dabei auf unterschiedliche Weise realisiert werden. Eine besonders geeignete Realisierungsform ist in der schweizerischen Patentanmeldung mit der Anmeldenummer 02171/94-6 angegeben, wobei deren Inhalt ausdrücklich als Bestandteil dieser Patentanmeldung zu betrachten ist.

Da sich das Echosignal aufgrund von sich ändernden Leitungscharakteristiken ebenfalls ändert, müssen die Koeffizienten des Filters AF den neuen Bedingungen laufend angepasst werden. Dies kann beispielsweise mit dem bekannten LMS-(Least Mean Square)-Algorithmus oder LMS-Varianten vorgenommen werden, mit deren Hilfe die Koeffizienten des Filters AF adaptiert werden (B. Widrow und S. D. Stearns, "Adaptive Signal Processing", Prentice-Hall, Inc., Englewood Cliffs, New Jersey, 1985; C. Cowan und P. Grant, "Adaptive Filters", Prentice-Hall, 1985).

In Fig. 2 sind Signalverläufe in verschiedenen Signalpunkten PA, PB, PC und PD (Fig. 1) des Sendepfades des bekannten Übertragungsnetzwerks TU angegeben. So befindet sich der Signalpunkt PA vor dem digitalen Vorfilter DPF, der Signalpunkt PB zwischen dem Digital/Analog-Wandler DA und dem digitalen Vorfilter DPF, der Signalpunkt PC zwischen dem analogen Glättungsfilter ATP und dem Digital/Analog-Wandler DA und der Signalpunkt PD schliesslich zwischen der Übertragungseinheit GS und dem analogen Glättungsfilter ATP.

Der in Fig. 2A dargestellte Signalverlauf entspricht demjenigen im Signalpunkt PA und somit dem Sendesignal SS, wobei für die folgenden Erläuterungen der Einfachheit halber ein einzelner Puls dargestellt ist, dessen Höhe einem der möglichen Symbolwerte entspricht. Solche Pulse folgen einander in der Symbolrate des Sendesignals SS. Die Form der auf die Übertragungsleitung L gelangenden Pulse muss in Pulsformen gebracht werden, die in durch internationale Standardisierungsorganisationen vorgeschriebenen Toleranzbereichen liegen oder die zumindest zur Übertragung über die Übertragungsleitung L geeignet sind. So schreibt beispielsweise das ETSI (European Telecommunications Standards Institute) eine Pulsform bzw. dessen Toleranzbereich im Zeitbereich vor, wobei gleichzeitig Anforderungen im Frequenzbereich bezüglich der spektralen Leistungsdichte zu erfüllen sind. Damit diese Anforderungen erfüllt werden können, wird in bekannter Weise das digitale Vorfilter DPF (Fig. 1) eingesetzt, das den in Fig. 2A dargestellten Puls in eine in Fig. 2B dargestellte Pulsfolge mit einer wesentlich höheren Taktrate erzeugt. Durch diese neue Pulsfolge wird das analoge Sendesignal - wenn auch an dieser Stelle nur diskret - vorgeformt. Im in Signalrichtung gesehen folgenden

3

Digital/Analog-Wandler DA (Fig. 1), dessen Wandlungsrate der Taktfrequenz des digital vorgefilterten Eingangssignals entspricht, wird das am Signalpunkt PC (Fig. 1) vorhandene und in Fig. 2C dargestellte analoge Signal erzeugt, das schliesslich mit dem analogen Glättungsfilter ATP in die gewünschte, von den Standards geforderte analoge Form gebracht wird. Als Glättungsfilter ATP wird üblicherweise ein standardmässiges Tiefpassfilter, insbesondere ein Bessel- oder ein Butterworth-Filter, verwendet, das typischerweise 2. bis 5. Ordnung ist.

Von erheblichem Nachteil bei einem derart aufgebauten Sendepfad erweisen sich die Anforderungen an den Digital/Analog-Wandler DA. Dieser muss zunächst eine Wandlungsrate aufweisen, die ein Vielfaches der Symbolrate beträgt. Ferner werden auch an die Auflösung und an die Linearität des Digital/Analog-Wandlers DA erhöhte Anforderungen gestellt, damit das gewünschte analoge Sendesignal genau erzeugt werden kann und damit bei den verschiedenen zu sendenden Pulsen keine nichtlinearen Verzerrungen auftreten können.

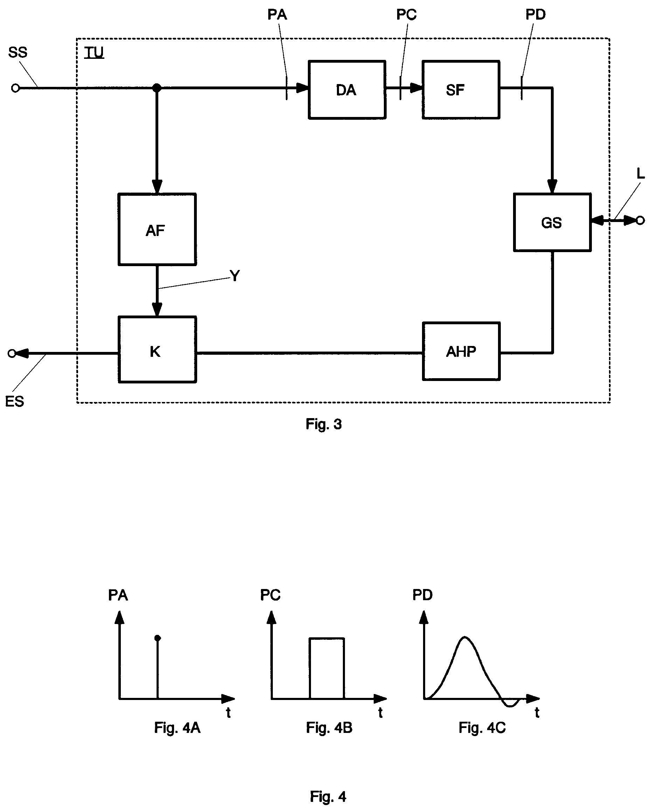

Fig. 3 zeigt einen prinzipiellen Aufbau eines erfindungsgemässen Übertragungsnetzwerks TU, das im wesentlichen mit dem in Fig. 1 dargestellten Übertragungsnetzwerk TU übereinstimmt, wobei jedoch der Sendepfad des erfindungsgemässen Übertragungsnetzwerks TU nunmehr lediglich aus dem Digital/Analog-Wandler DA und einem Sendefilter SF besteht. Das Sendesignal SS ist gegenüber dem in Fig. 1 dargestellten Übertragungsnetzwerk TU demzufolge direkt dem Digital/Analog-Wandler DA beaufschlagt, dessen Ausgang mit dem Eingang des Sendefilters SF verbunden ist. Schliesslich ist das Sendefilter SF mit der Übertragungseinheit GS verbunden. Zwischen dem Sende- und dem Empfangspfad ist wiederum ein adaptives Filter AF und ein Kompensator K vorgesehen, in dem zur Erzeugung des tatsächlichen Empfangssignals ein im adaptiven Filter AF geschätztes Echosignal Y vom Signal im Empfangspfad subtrahiert wird.

Zur Wahrung der Übersichtlichkeit sind in Fig. 3 - wie auch bereits in Fig. 1 - allfällig vorhandene Verstärkungsfaktoren, Addierer, Tiefpass- und Hochpassfilter, etc. nicht dargestellt. Solche zusätzlichen Signalverarbeitungseinheiten werden in den folgenden Erläuterungen nur dann erwähnt, wenn es sich für das Verständnis der Funktionsweise der Schaltungsanordnung als unumgänglich erweist.

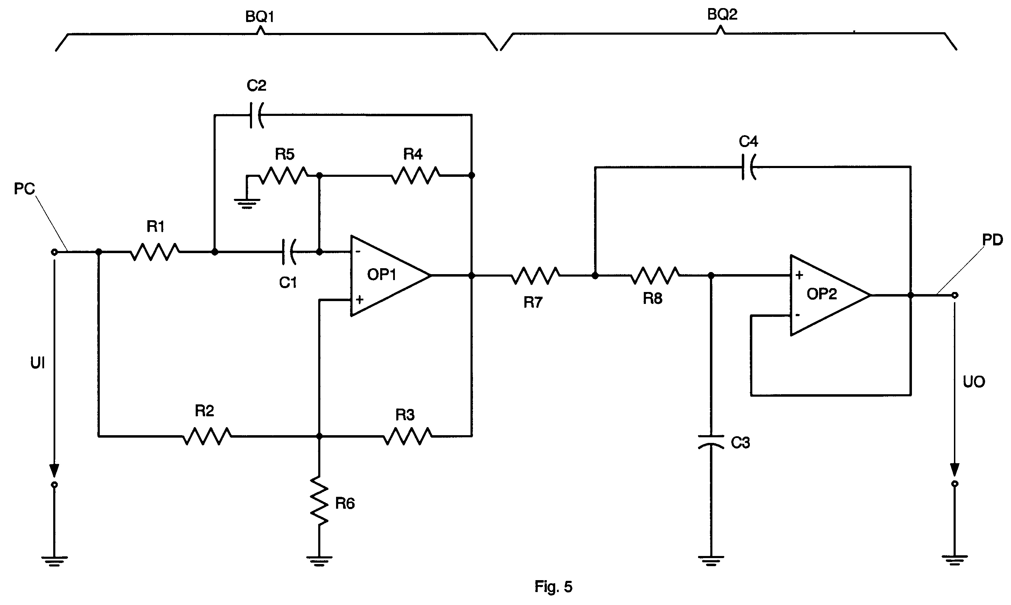

Im vorliegenden Ausführungsbeispiel wird zudem davon ausgegangen, dass das Sendesignal SS als vierwertiges Signal zur Verfügung steht, das durch die Transformation eines binären Datenstromes beispielsweise mit Hilfe eines in Fig. 3 nicht dargestellten 2B1Q-Codierers erzeugt wird. Dabei wandelt der 2B1Q-Codierer jeweils zwei Bit des binären Datenstromes in ein vierwertiges Symbol um, wobei folgendes Codierschema angewendet wird: die binäre Folge "00" wird zu -3, "01" zu -1, "11" zu +1 und "10" zu +3. Somit wird eine Übertragungsrate von 1168 kBit/s in eine Symbolrate von 584 kS/s konvertiert. Dieses vierwertige Sendesignal SS wird einerseits dem adaptiven Filter AF und anderseits dem Digital/Analog-Wandler DA zugeführt, in dem die möglichen Symbolwerte in Spannungswerte - beispielsweise in -3, -1, +1 und +3 Volt - umgewandelt werden. Dieses nunmehr analoge Signal wird über das Sendefilter SF, das anhand Fig. 5 weiter erläutert wird, der Übertragungseinheit GS zugeführt, die das Signal - im Idealfall ohne zu verändern - in die Übertragungsleitung L einkoppelt. Auf der Empfangsseite wird in analoger Weise das über die Übertragungsleitung L empfangene Signal ausgekoppelt und dem Empfangspfad zugeführt. Die Übertragungseinheit GS hat demzufolge die Funktion einer üblicherweise bei Endgeräten verwendeten Gabelschaltung, welche die über die Übertragungsleitung L übertragenen Signale entsprechend ihrer Übertragungsrichtung trennt bzw. zusammenführt.

Analog zu Fig. 2, die verschiedene Signalverläufe in den in Fig. 1 speziell bezeichneten Signalpunkten PA, PB, PC und PD zeigt, sind in Fig. 4 Signalverläufe in den in Fig. 3 gekennzeichneten Signalpunkten PA, PC und PD dargestellt. Aufgrund des Fehlens eines digitalen Vorfilters im erfindungsgemässen Übertragungsnetzwerk TU (Fig. 3) sind nunmehr lediglich die drei Signalpunkte PA, PC und PD von Interesse.

Wie in Fig. 2A ist auch in Fig. 4A ein einzelner Puls, dessen Höhe einem der möglichen Symbolwerte entspricht, stellvertretend für das Sendesignal SS (Fig. 3) dargestellt. Dieser Puls wird im Digital/Analog-Wandler DA (Fig. 3) in einen analogen Rechteckpuls (Fig. 4B) transformiert und schliesslich dem Sendefilter SF (Fig. 3) zugeführt, in dem der geforderte analoge Übertragungspuls geformt wird (Fig. 4C). Im Sendefilter SF (Fig. 3) wird somit neben der Glättung auch die Pulsformung vorgenommen. Dabei werden - falls die erwähnte 2B1Q-Codierung verwendet wird - die durch den Digital/Analog-Wandler DA erzeugten Rechteckpulse der Höhe -3, -1, +1 oder +3 in eine genau gewünschte Pulsform umgewandelt. Dazu sind die Pole und die Nullstellen der Übertragungsfunktion des Sendefilters mit einem geeigneten Verfahren zu bestimmen. Standardfilter, wie die bekannten Chebyshev- oder Butterworth-Filter, eignen sich als Ausgangslage für das Sendefilter nicht, da die Nullstellen bei diesen im "Unendlichen" fixiert sind. Trotzdem ist der Aufwand für ein mit einem Systemidentifikationsverfahren erhaltenen optimalen Sendefilter praktisch identisch zu einem als Glättungsfilter verwendeten Standardfilter. Dies ist auch aus der folgenden Übertragungsfunktion T(s) ersichtlich, die bezüglich einer Symbolrate von 584 Symbole/s optimiert wurde und gleichzeitig die vom ETSI geforderten Bedingungen erfüllt:

$$T(s) = T_1(s) \cdot T_2(s)$$

wobei

$$T_1(s) = 0.3940 \cdot \frac{s^2 + 1.1834 \cdot 10^6 \cdot s + 2.4134 \cdot 10^{13}}{s^2 + 4.9598 \cdot 10^6 \cdot s + 1.3263 \cdot 10^{13}}$$

und

$$T_2(s) = \frac{1}{0.3940} \cdot \frac{6.1007 \cdot 10^{12}}{s^2 + 5.2757 \cdot 10^6 \cdot s + 1.1154 \cdot 10^{13}}$$

ist.

Wird zur Realisierung dieser Übertragungsfunktion T(s) die SC-(Switched Capacitor)-Technologie verwendet, so muss die Schaltungsanordnung bei Veränderung der Symbolrate nicht verändert werden. Die fehlende Programmierbarkeit, die dieses analoge Filter gegenüber einem digitalen Filter aufweist, schränkt die Anwendbarkeit demzufolge in keiner Weise ein.

Zusammenfassend wird festgestellt, dass mit dem in Fig. 5 dargestellten erfindungsgemässen Sendefilter sowohl die Glättung als auch die Pulsformung vorgenommen wird. Dabei genügt es vollumfänglich, wenn der Digital/Analog-Wandler DA (Fig. 3) eine Wandlungsrate aufweist, die nicht grösser als die Symbolrate des Sendesignals SS (Fig. 3) ist. Enthält das adaptive Filter AF (Fig. 3) zumindest ein FIR-Filterteil, der den ersten Teil der Echoimpulsantwort abdeckt und der nach dem Speicherkompensationsverfahren realisiert ist, so genügt zudem ein einfacher Digital/Analog-Wandler DA (Fig. 3) mit zwei Bit Auflösung, denn dessen allfällig vorhandenen Nichtlinearitäten werden erfindungsgemäss mit Hilfe des noch zu erläuternden FIR-Filterteils im adaptiven Filter AF kompensiert.

Fig. 5 zeigt eine mögliche Realisierungsform der oben angeführten Übertragungsfunktion des Sendefilters SF (Fig. 3), das aus einer Kaskade von einem ersten und einem zweiten Filterblock BQ1 und BQ2 besteht. Während im ersten Filterblock BQ1 die Teilübertragungsfunktion $T_1(s)$, welche die nicht im Unendlichen enthaltenen Nullstellen enthält, realisiert ist, ist im zweiten Filterblock BQ2 die Teilübertragungsfunktion $T_2(s)$ realisiert, die nur im Unendlichen Nullstellen aufweist. Die Reihenfolge der zwei Filterblöcke BQ1 und BQ2 kann auch vertauscht sein.

Der erste Filterblock BQ1 besteht seinerseits aus einem ersten Operationsverstärker OP1, sechs Widerständen R1 bis R6 und zwei Kondensatoren C1 und C2, wobei die Eingangsspannung UI ein zum Signalverlauf am Signalpunkt PC proportionaler Signalwert ist. Demgegenüber weist der zweite Filterblock BQ2 einen zweiten Operationsverstärker OP2, zwei Widerstände R7 und R8 und zwei Kondensatoren C3 und C4 auf, wobei das Ausgangssignal des ersten Operationsverstärkers OP1 das Eingangssignal des zweiten Filterblocks BQ2 ist und das Ausgangssignal des zweiten Operationsverstärkers OP2 einer Ausgangsspannung UO entspricht, die zum Signalverlauf im Signalpunkt PD proportional und zugleich das Ausgangssignal des Sendefilters SF ist.

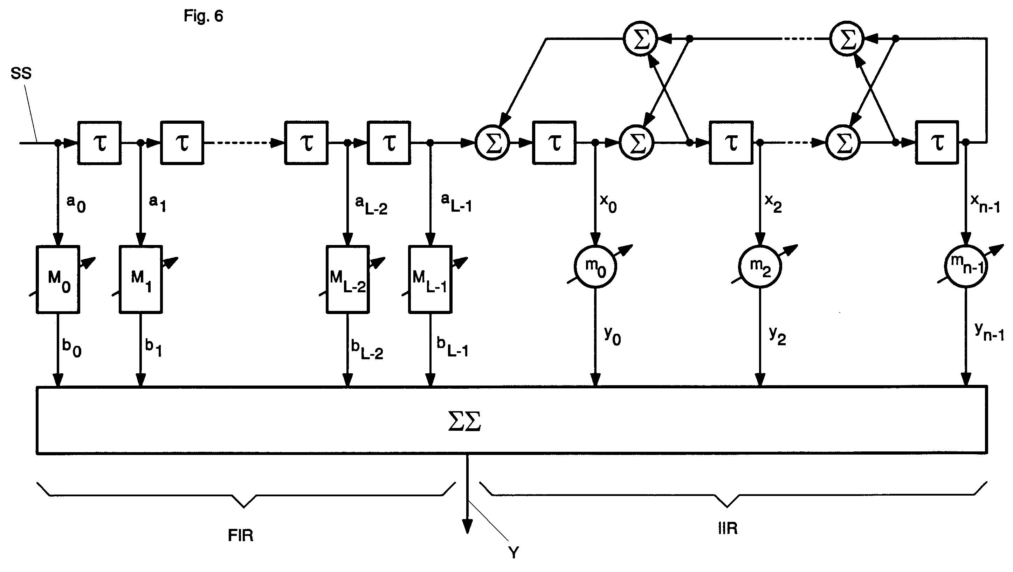

Wie bereits erwähnt, kann das adaptive Filter AF ein bekanntes FIR-(Finite Impulse Response)-Filter sein, in dem entsprechend der vorhandenen Anzahl Koeffizienten Multiplikationen und Additionen ausgeführt werden. Der Schaltungsaufwand solcher FIR-Filter ist jedoch relativ gross, weshalb die Verwendung eines IIR-(Infinite Impulse Response)-Filters in Kombination mit einem FIR-Filter vorgeschlagen wurde (beispielsweise in EP-0 384 490). Gemäss dieser bekannten Lehre kann der Schaltungsaufwand für das adaptive Filter AF wesentlich reduziert werden. Eine solche Kaskade ist jedoch problematisch bezüglich ihres Adaptionsverhaltens. Besser geeignet sind orthogonale Filterstrukturen, wie das in Fig. 6 dargestellte adaptive Filter AF, das aus einem FIR-Filterteil und einem IIR-Filterteil besteht, der vorzugsweise in der "Inversen Lattice"-Struktur realisiert ist. Wesentlich dabei ist, dass nicht nur die FIR-Filterzustände $a_0$ bis $a_{L-1}$, sondern auch die IIR-Filterzustände $x_0$ bis $x_{n-1}$ unkorreliert sind.

Der FIR-Filterteil besteht aus in Serie geschalteten Verzögerungsgliedern $\tau$, aus Speicherelementen $M_0$ bis $M_{L-1}$ mit je vier Koeffizientenelementen $b_0$ bis $b_{L-1}$ und einem Addierer $\Sigma\Sigma$. Das Eingangssignal des adaptiven Filters AF und somit auch des FIR-Filterteils ist das Sendesignal SS, das einerseits dem ersten Verzögerungsglied $\tau$ der in Serie geschalteten weiteren Verzögerungsgliedern $\tau$ und anderseits dem ersten Speicherelement $M_0$ zugeführt wird. In gleicher Weise sind die weiteren Speicherelemente $M_1$ bis $M_{L-1}$ angeordnet, wobei deren Eingangssignale zwischen sich folgenden Verzögerungsgliedern $\tau$ abgegriffen und deren Ausgangssignale im Addierer $\Sigma\Sigma$ zusammengefasst werden. In diesem Addierer $\Sigma\Sigma$ werden ausserdem auch die Ausgangssignale des IIR-Filterteils zu dem geschätzten Echosignal Y zusammengefasst. Die Pole des IIR-Filters werden aus Stabilitätsgründen während dem Betrieb nicht verändert. Sie werden beispielsweise mit einem im Aufsatz von A. Kaelin et. al. beschriebenen Verfahren ("Linear Echo Cancellation Using Optimized Recursive Prefiltering", Proc. IEEE Int. Symp. on Circuits and Systems, Chicago, Seiten 463 bis 466, 1993) optimal an die gegebene Systemumgebung angepasst. Es sei jedoch ausdrücklich darauf verwiesen, dass das adaptive Filter AF (Fig. 3) nicht notwendigerweise ein IIR-Filterteil aufweisen muss.

Der FIR-Filterteil und dessen Adaption ist erfindungsgemäss nach dem Speicherkompensationsverfahren realisiert, um Abbildungsfehler bzw. statische Nichtlinearitäten des Digital/Analog-Wandlers DA (Fig. 1 und 3), die aufgrund einer nichtlinearen Eingang/Ausgang-Kennlinie entstehen, korrigieren zu können. Dabei werden die beiden Bit der vierwertigen Zustände $a_0$ bis $a_{L-1}$ als Adressen für das entsprechende Speicherelement $M_0$ bis $M_{L-1}$ verwendet. Der Werte der adressierten Speicherzellen werden im Addierer $\Sigma\Sigma$ zur Bildung des geschätzten Echosignals Y akkumuliert. Ferner werden in jedem Speicherelement $M_0$ bis $M_{L-1}$ die Werte in den Speicherelementen $M_0$ bis $M_{L-1}$ adaptiv gebildet. Angaben bezüglich dem Adaptionsalgorithmus können dem Aufsatz von N. Holte und S. Stueflotten mit dem Titel "A new digital echo canceler for two-wire subscriber lines." (IEEE Trans. on Communications, 29(11), Seiten 1573 bis 1581, November 1981) entnommen werden. Somit werden für ein FIR-Filter mit 20 Taps 20 Speicherelemente $M_0$ bis $M_{19}$ mit je vier Speicherzellen benötigt. Der Speicheraufwand beträgt dann für 16 Bit breite Speicherzellen 20 * 4 * 16 = 1280 Bit, oder allgemein ausgedrückt:

$$2^2 \cdot L \cdot W \text{ Bit,}$$

wobei L die Anzahl Verzögerungselemente $\tau$ und W die Wortbreite der in den Speicherelementen $M_0$ bis $M_{L-1}$ gespeicherten Werte ist.

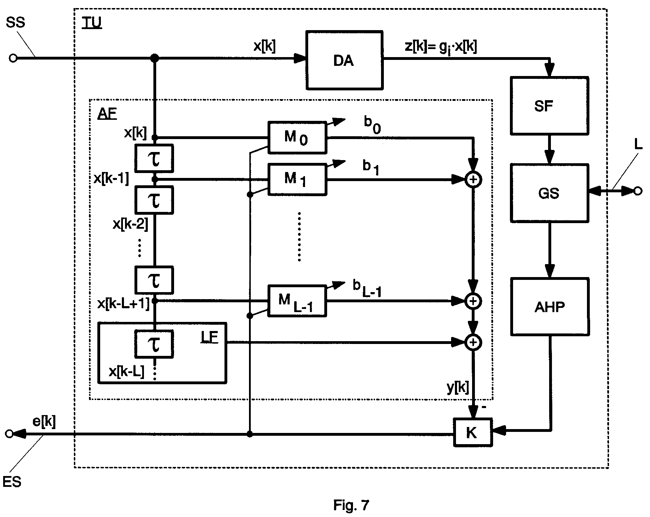

Fig. 7 zeigt wiederum ein Übertragungsnetzwerk TU zur Kompensation von statischen Nichtlinearitäten entsprechend Fig. 3, jedoch mit Detailangaben zu dem im Übertragungsnetzwerk TU integrierten adaptiven Filter AF. Die im Empfangspfad enthaltenen und die bei der Kompensation benötigten Elemente sind in einem Kompensator K der Einfachheit halber zusammengefasst. Des weiteren sind in Fig. 7 digitale Werte mit in eckigen Klammern angegebenen Indizes bezeichnet. So wird beispielsweise der digitale Wert des Sendesignals SS zum Abtastzeitpunkt k mit x[k] bezeichnet. Der Signalwert x[k] wird somit sowohl dem ersten Verzögerungselement $\tau$ des adaptiven Filters AF als auch dem Digital/Analog-Wandler DA zugeführt. Entsprechend dem in Fig. 6 dargestellten adaptiven Filter AF sind weitere (L-2)-Verzögerungselemente $\tau$ vorgesehen, die zusammen mit dem ersten Verzögerungselement $\tau$ in Serie geschaltet sind. Damit werden an den Ausgängen der Verzögerungselemente $\tau$ die Signalwerte x[k-1] bis x[k-L+1] erzeugt, die zusammen mit dem Signalwert x[k] zur Adressierung von in Speicherelementen $M_0$ bis $M_{L-1}$ enthaltenen Speicherplätzen verwendet werden. Dabei sind - ausgehend von einer Wortbreite von zwei Bit für die Signalwerte x[k] - in jedem der Speicherelemente $M_0$ bis $M_{L-1}$ vier Speicherplätze für jeden Ausgangswert $b_0$ bis $b_{L-1}$ vorgesehen. Der Wert des adressierten Speicherplatzes wird als Ausgangswert $b_0$ bis $b_{L-1}$ zur Berechnung des geschätzten Echosignals Y (Fig. 3) bzw. y[k] verwendet, indem die aus den Speicherelementen $M_0$ bis $M_{L-1}$ gelesenen Ausgangswerte $b_0$ bis $b_{L-1}$ akkumuliert werden. Mathematisch lässt sich die Berechnung des geschätzten Ausgangssignals Y bzw. y[k] demnach wie folgt beschreiben:

$$y[k] = \sum_{i=0}^{L-1} b_i \, , \text{ wobei } \; b_i = f\big(x[k-i]\big)$$

Die Ausgangswerte $b_0$ bis $b_{L-1}$ bzw. sämtliche in den Speicherelementen $M_0$ bis $M_{L-1}$ gespeicherten Werte werden aufgrund des Empfangssignals ES bzw. dessen Wert e[k] derart adaptiert, dass die Nichtlinearitäten im Digital/Analog-Wandler DA kompensiert werden.

Den in Serie geschalteten Verzögerungselementen $\tau$ im adaptiven Filter AF ist ein linearer Filterteil LF nachgeschaltet, der seinerseits weitere Verzögerungselemente $\tau$ enthält. Dabei ist als Struktur des linearen Filterteils LF sowohl ein FIR-Filter oder ein IIR-Filter oder eine Kombination von FIR- und IIR-Filter denkbar. Bei der einfachsten Ausführungsform des adaptiven Filters AF ist jedoch kein linearer Filterteil LF vorgesehen. Entsprechend der gewählten Filterstruktur ist die vorstehend genannte Formel zur Bestimmung des Signalwertes y[k] zu ergänzen.

Wie erwähnt, entstehen statische Nichtlinearitäten, wenn der Digital/Analog-Wandler DA keine lineare Eingang/Ausgang-Kennlinie aufweist. Wird davon ausgegangen, dass die Wortbreite W von x[k] zwei Bit beträgt und z[k] der Wert des analogen Ausgangssignals des Digital/Analog-Wandlers DA ist (Fig. 7), so ist idealerweise z[k] = x[k] für alle vier möglichen Eingangswerte x[k]. Falls nun

$$z[k] = g_i \cdot x[k] \text{ mit } g_i \neq 1 \text{ für i=0, 1, 2, 3}$$

ist, so spricht man entsprechend oben genannter Definition von statischen Nichtlinearitäten.

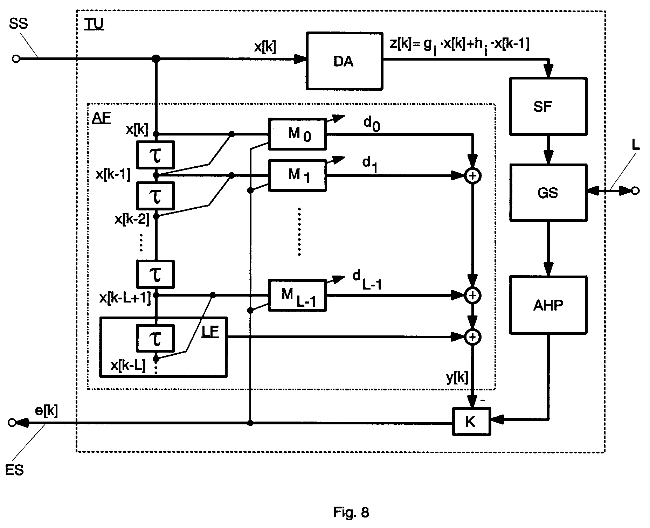

Fig. 8 zeigt ein Übertragungsnetzwerk TU, mit Hilfe dessen neben statischen auch dynamische Nichtlinearitäten des Digital/Analog-Wandler DA korrigiert werden. Dynamische Nichtlinearitäten liegen dann vor, wenn ein Ausgangswert z[k] des Digital/Analog-Wandlers DA vom Eingangswert x[k] und zumindest von einem weiteren vorhergehenden Eingangswert x[k-1] abhängt. Mathematisch lässt sich diese Abhängigkeit wie folgt ausdrücken:

$$z[k]=g_i \cdot x[k]+h_i \cdot x[k\text{-}1] \text{ mit } g_i \neq 1 \text{ und } h_i \neq 0 \text{ für i=0, 1, 2, 3}$$

In analoger Weise lassen sich diese dynamischen Nichtlinearitäten dadurch kompensieren, dass bei der Berechnung eines Echosignalanteils immer auch ein vorangehender Signalwert zur Adressierung eines Ausgangswertes $d_0$ bis $d_{L-1}$ verwendet wird. Das geschätzte Echosignal Y bzw. y[k] wird dann wie folgt bestimmt (Fig. 8):

$$y[k] = \sum_{j=0}^{L-1} d_j \;, \text{ wobei } d_j = w\big(x[k - j + 1], x[k - j]\big)$$

ist.

Dabei werden die beiden Bit des Signalwertes x[k-j] und des Signalwertes x[k-j+1] als Adressleitungen für das Speicherelement $M_j$ verwendet. Bei der oben angegebenen Formel bleibt der Anteil eines allfällig vorhandenen linearen Filterteils LF unberücksichtigt. Der gesamte Speicherbedarf beträgt demnach im vorliegenden Fall

$$2^4 \cdot L \cdot W \text{ Bit,}$$

wobei L wiederum der Anzahl Verzögerungselemente $\tau$ und W der Wortbreite des in den Speicherelementen $M_0$ bis $M_{L-1}$ gespeicherten Werte entspricht.

Falls Nichtlinearitäten mit längerem Gedächtnis als 1 kompensiert werden sollen - d.h. falls mehr als ein vorhergehender Eingangssignalwert x[k-i] (wobei i >1) Einfluss auf den nächsten Ausgangswert y[k] hat -, kann das Speicherkompensationsverfahren analog angewendet werden. Anstelle der Miteinbeziehung des momentanen und eines vorhergehenden Eingangssignalwertes x[j] und x[j-1] zur Berechnung des j-ten Echosignalanteils werden auch weitere Eingangssignalwerte x[j-2], x[j-3], etc. mitberücksichtigt. Damit können auch komplexere Nichtlinearitäten des Digital/Analog-Wandlers DA kompensiert werden. Der Speicherbedarf steigt allerdings entsprechend an: Beträgt die Anzahl der berücksichtigten Eingangssignalwerte S, so lässt sich die erforderliche Speichergrösse für alle Speicherelemente $M_0$ bis $M_{L-1}$ insgesamt wie folgt berechnen:

$$2^{2(S+1)} \cdot L \cdot W \text{ Bit}$$

In einer weiteren Ausführungsform der Erfindung ist vorgesehen, dass bei jeder Echosignalanteilsberechnung eine unterschiedliche Anzahl von Eingangssignalen x[j] zur Kompensation von Nichtlinearitäten verwendet wird. Beispielsweise können von einem adaptiven Filter AF mit 32 Verzögerungselementen $\tau$ die ersten 16 Verzögerungselemente $\tau$ zur Kompensation von dynamischen Nichtlinearitäten mit Gedächtnis 1 - d.h. die Berechnung des geschätzten Echosignalwertes unter Berücksichtigung der momentanen und der vorhergehenden Eingangssignalwerte - verwendet werden, während die zweiten 16 Verzögerungselemente $\tau$ zur Kompensation von statischen Nichtlinearitäten allein eingesetzt werden. Grundsätzlich sind beliebige Unterteilung bzw. Kombinationen denkbar.

Es sei ausdrücklich darauf hingewiesen, dass im adaptiven Filter AF lediglich ein Speicher vorgesehen ist und dass die den Adressbereich bildenden Eingangssignale x[k] bis x[k-L+1] diesem Speicher beliebig zugeordnet sein können. Insbesondere ist auch ein einziger Speicher mit nur einem Adressbereich, der aus sämtlichen Bit der Eingangssignale x[k] bis x[k-L+1] gebildet ist, denkbar. In diesem Fall wird allerdings der Speicherbedarf unrealistisch gross, beispielsweise $4^{20} * 16 = 1.76 * 10^{13}$ Bit für ein FIR-Filter mit 20 Taps (L=20).

Schliesslich ist ausdrücklich darauf hinzuweisen, dass die erfindungsgemässe Schaltungsanordnung nicht allein bei der HDSL Datenübertragung erfolgreich angewendet wird. Vielmehr eignet sich die Schaltungsanordnung auch für andere Übertragungsarten zur Kompensation von Echosignalanteilen.

**Patentansprüche**

1. Schaltungsanordnung bestehend aus einem ein Sendesignal (SS) führenden Sendepfad, einem ein Empfangssignal (ES) führenden Empfangspfad, einem adaptiven Filter (AF), einem im Empfangspfad enthaltenen Kompensator (K), einem Digital/Analog-Wandler (DA), einer Übertragungseinheit (GS) und einer an diese angeschlossenen Übertragungsleitung (L), über die zumindest das Sendesignal (SS), das Empfangssignal (ES) und Echosignalanteile übertragen werden, wobei der Sende- und der Empfangspfad mit der Übertragungseinheit (GS) verbunden sind, das Sendesignal (SS) zur Schätzung des Echosignals dem adaptiven Filter (AF) zugeführt wird und das geschätzte digitale Echosignal (Y) dem Kompensator (K) zur Reduktion des Echosignalanteils im Empfangspfad zugeführt wird, **dadurch gekennzeichnet**, dass das Sendesignal (SS) dem Digital/Analog-Wandler (DA) beaufschlagt ist und dass im Sendepfad zwischen dem Digital/Analog-Wandler (DA) und der Übertragungseinheit (GS) ein Sendefilter (SF) vorgesehen ist.

2. Schaltungsanordnung nach Anspruch 1, **dadurch gekennzeichnet**, dass das Sendefilter (SF) derart ausgebildet ist, dass auf einen Rechteckpuls am Eingang des Sendefilters (SF) an dessen Ausgang eine vorgegebene Pulsform erzeugt wird.

3. Schaltungsanordnung nach Anspruch 1 oder 2, **dadurch gekennzeichnet**, dass das adaptive Filter (AF) zumindest aus einem FIR-Filterteil (FIR) besteht, der vom Speicherkompensationstyp ist.

4. Schaltungsanordnung nach Anspruch 3, **dadurch gekennzeichnet**, dass das adaptive Filter (AF) zudem aus einem IIR-Filterteil (IIR; LF) und/oder aus einem weiteren FIR-Filterteil (LF) besteht.

5. Schaltungsanordnung nach Anspruch 3 oder 4, **dadurch gekennzeichnet**, dass im FIR-Filterteil (FIR) mindestens ein Speicherelement ($M_0$, ..., $M_{L-1}$) und mindestens ein Verzögerungselement ($\tau$) vorgesehen sind, dass, falls mehreren Verzögerungselemente ($\tau$) vorgesehen sind, diese in Serie geschaltet sind und das erste Verzögerungselement ($\tau$) mit dem Sendesignal (SS) beaufschlagt ist, dass das Sendesignal (SS) und durch die Verzögerungselemente ($\tau$) verzögerten Sendesignale je mindestens einem Speicherelement ($M_0$, ..., $M_{L-1}$) beaufschlagt sind, aus dem bzw. aus denen je ein Wert einer im Speicherelement ($M_0$, ..., $M_{L-1}$) adressierten Speicherselle gelesen und in einem Addierer akkumuliert wird.

6. Schaltungsanordnung nach einem der Ansprüche 3 bis 5, **dadurch gekennzeichnet**, dass das Sendesignal (SS) vierwertig ist und dass der Digital/Analog-Wandler (DA) eine Auflösung von zwei Bit aufweist, wobei der FIR-Filterteil (FIR) derart adaptiv eingestellt wird, dass Nichtidealitäten des Digital/Analog-Wandlers (DA), insbesondere Nichtlinearitäten, korrigiert werden.

7. Schaltungsanordnung nach Anspruch 6, **dadurch gekennzeichnet**, dass das Sendesignal (SS) 2B1Q-codiert ist.

8. Schaltungsanordnung nach einem der Ansprüche 4 bis 7, **dadurch gekennzeichnet**, dass für den IIR-Filterteil (IIR) charakteristische Polstellen entsprechend der Übertragungscharakteristik der Übertragungsleitung (L) fixiert sind.

9. Schaltungsanordnung nach einem der Ansprüche 4 bis 8, **dadurch gekennzeichnet**, dass das Sendefilter (SF) eine Übertragungsfunktion $T(s) = T_1(s) \cdot T_2(s)$ aufweist, wobei

$$T_1(s) = 0.3940 \cdot \frac{s^2 + 1.1834 \cdot 10^6 \cdot s + 2.4134 \cdot 10^{13}}{s^2 + 4.9598 \cdot 10^6 \cdot s + 1.3263 \cdot 10^{13}}$$

und

$$T_2(s) = \frac{1}{0.3940} \cdot \frac{6.1007 \cdot 10^{12}}{s^2 + 5.2757 \cdot 10^6 \cdot s + 1.1154 \cdot 10^{13}}$$

ist.

10. Schaltungsanordnung nach einem der vorangehenden Ansprüche, **dadurch gekennzeichnet**, dass die Wandlungsrate des Digital/Analog-Wandlers (DA) nicht grösser als die Symbolrate des Sendesignals (SS) ist.

Fig. 1        PRIOR ART

Fig. 2        PRIOR ART

**Fig. 3**

Fig. 4A          Fig. 4B          Fig. 4C

**Fig. 4**

Fig. 5

BQ1    BQ2

PC

UI

C2

R5    R4

R1

C1    OP1

PD

C4

R7    R8    OP2

UO

R2    R3

R6

C3

EP 0 695 046 A1

Fig. 6

Fig. 7

SS

TU

x[k]

$z[k] = g_i \cdot x[k] + h_i \cdot x[k-1]$

DA

SF

L

AE

x[k]

$\tau$

x[k-1]

$\tau$

x[k-2]

$\tau$

x[k-L+1]

$\tau$   LE

x[k-L]

$M_0$   $d_0$

$M_1$   $d_1$

$M_{L-1}$   $d_{L-1}$

GS

AHP

y[k]

e[k]

ES

K

Fig. 8

Europäisches
Patentamt

**EUROPÄISCHER RECHERCHENBERICHT**

Nummer der Anmeldung

EP 95 11 1238

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | IEEE JOURNAL OF SOLID-STATE CIRCUITS, Bd. 23, Nr. 2, April 1988 NEW YORK US, Seiten 311-317, ROESSLER ET AL 'CMOS Analog Front End of a Transceiver with Digital Echo Cancellation for ISDN' * Seite 311, linke Spalte, Zeile 15 - rechte Spalte, Zeile 9; Abbildung 1 * * Seite 311, rechte Spalte, Zeile 17 - Seite 312, rechte Spalte, Zeile 9; Abbildungen 2,3 * --- | 1,2,7 | H04B3/23 |
| A | INTERNATIONAL JOURNAL OF ELECTRONICS, Bd. 56, Nr. 2, Februar 1984 LONDON GB, Seiten 211-216, CHEUNG 'A wave shaping method for NRZ pulses' * Absatz 2 * --- | 2,9 | |
| X | EP-A-0 229 524 (FUJITSU LIMITED) 22.Juli 1987 * Seite 3, Spalte 4, Zeile 55 - Seite 4, Spalte 5, Zeile 17; Abbildung 4 * ----- | 1 | **RECHERCHIERTE SACHGEBIETE (Int.Cl.6)**<br><br>H04B<br>H04L |

Der vorliegende Recherchenbericht wurde für alle Patentansprüche erstellt

| Recherchenort | Abschlußdatum der Recherche | Prüfer |
|---|---|---|
| DEN HAAG | 8.November 1995 | Bossen, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P04C03)